# EUROPÄISCHE PATENTSCHRIFT

(11) **EP 3 164 628 B1**
(45) Veröffentlichungstag und Bekanntmachung des Hinweises auf die Patenterteilung: **14.02.2018**
(21) Anmeldenummer: 14776822.0
(22) Anmeldetag: 27.09.2014
(51) Int. Cl.: F16K 11/07, F16K 27/04

(54) **VENTIL**
VALVE
SOUPAPE

(43) Veröffentlichungstag der Anmeldung: 10.05.2017
(73) Patentinhaber: Festo AG & Co. KG, 73734 Esslingen (DE)
(72) Erfinder: USINGER, Eduard, 73773 Aichwald (DE); SEIFFER, Tillmann, 73734 Esslingen (DE)
(74) Vertreter: Patentanwälte Magenbauer & Kollegen Partnerschaft mbB
(86) Internationale Anmeldenummer: PCT/EP2014/002622
(87) Internationale Veröffentlichungsnummer: WO 2016/045689

(56) Entgegenhaltungen:
- DE-A1- 2 423 656
- DE-A1-102008 014 413
- US-A- 2 603 236
- US-A- 4 739 967

## Beschreibung

Die Erfindung betrifft ein Ventil, mit einem Ventilgehäuse, in dem eine eine Längsachse aufweisende Ventilschieberkammer ausgebildet ist, in der ein durch Auferlegung einer Umschaltkraft unter Ausführung einer axialen Umschaltbewegung zwischen mehreren Schaltstellungen umschaltbarer Ventilschieber angeordnet ist, und mit Haltemitteln zum lösbar verrasteten gehäusefesten Fixieren des Ventilschiebers in wenigstens einer seiner Schaltstellungen, die eine aus einem gebogenen einstückigen Federelement bestehende Haltefeder aufweisen, die in eine sich wenigstens ein Stückweit um die Ventilschieberkammer herum erstreckende schlitzförmige Federkammer des Ventilgehäuses eingesetzt ist und die zwei in die Ventilschieberkammer hineinragende, den Ventilschieber auf diametral entgegengesetzten Seiten flankierende Rastabschnitte aufweist, denen jeweils eine axial unbeweglich am Ventilschieber angeordnete Rastnocke zugeordnet ist und die jeweils entgegen einer rückstellend wirkenden Federkraft der Haltefeder vorübergehend aus einer die zugeordnete Rastnocke hintergreifenden und dadurch den Ventilschieber axial fixierenden Sperrstellung in eine das Vorbeibewegen der zugeordneten Rastnocke und somit das Umschalten des Ventilschiebers ermöglichende Freigabestellung auslenkbar sind, wenn der Ventilschieber in der entsprechenden axialen Richtung mit einer Umschaltkraft beaufschlagt wird.

Vor allem bei sogenannten Impulsventilen, gelegentlich aber auch bei konventionellen Ventilen, besteht das Erfordernis, mindestens eine vom Ventilschieber eingenommene Schaltstellung durch gesonderte Haltemittel bis zum neuerlichen Umschalten zu fixieren. Impulsventile sind Mehrwegeventile, deren Ventilschieber zum Umschalten zwischen zwei Endstellungen impulsartig mittels eines die erforderliche Umschaltkraft hervorrufenden fluidischen Steuerdruckes beaufschlagt werden, wobei der Ventilschieber auch nach der Wegnahme des Steuerdruckes seine Endstellung beibehält. Solche Ventile haben den Vorteil, dass die Schaltstellungen des Ventilschiebers ohne ständige Energiezufuhr praktisch beliebig lange beibehalten werden können. Die zusätzlichen Haltemittel verhindern, dass der Ventilschieber seine Schaltstellung unbeabsichtigt ändert.

Die DE 10 2008 014 413 A1 beschreibt ein Ventil der eingangs genannten Art, bei dem die Haltemittel eine Haltefeder aufweisen, die in einer Federkammer des Ventilgehäuses fixiert ist und ein einstückiges Federelement aufweist. Das Federelement ist dreidimensional gebogen und hat einen im Wesentlichen C-förmigen Basisabschnitt, von dem in einer zur Ebene des Basisabschnittes rechtwinkeligen Richtung zwei federelastisch biegbare Tragarme wegragen, die jeweils einen mit einer Rastnocke des Ventilschiebers kooperierenden Rastabschnitt definieren. Zur Fixierung der Haltefeder ist im Ventilgehäuse ein als Federkammer bezeichenbarer Querkanal ausgebildet, in den die Haltefeder eingesteckt ist, wobei sie mit ihrem Basisabschnitt in der Federkammer gehalten ist und mit den beiden Rastabschnitten in die den Ventilschieber aufnehmende Ventilschieberkammer hineinragt. Obgleich das bekannte Ventil eine zuverlässige Positionssicherung des Ventilschiebers in seinen Schaltstellungen gewährleistet, hat sich doch gezeigt, dass der damit verbundene Herstellungsaufwand und Platzbedarf nicht unbeträchtlich ist, sodass ein Optimierungsbedarf besteht.

Aus der US 2603236 ist eine Ventilanordnung bekannt, bei der ebenfalls ein dreidimensional gebogenes Federelement verwendet wird, um verschiedene Schaltstellungen eines Ventilgliedes lösbar zu fixieren.

Die DE 24 23 656 A1 beschreibt ein elektromagnetisch betätigbares Ventil, dessen Ventilschieber mit einer im Wesentlichen ringförmig gebogenen Haltefeder in unterschiedlichen Schaltstellungen fixierbar ist. Die Haltefeder hat einen sich annähernd über 360° erstreckenden Bogenabschnitt, an dessen Endbereichen jeweils ein in Richtung zum Bogenabschnitt zurückragender Tragarm angeordnet ist, der einen mit dem Ventilglied zusammenwirkenden Rastabschnitt definiert.

In der US 4739967 ist eine Rastvorrichtung zur lösbaren Fixierung eines Ventilschiebers beschrieben, wobei der Ventilschieber an seinem Außenumfang eine Rastnut aufweist, die mit einem dreieckig oder quadratisch gebogenen Federelement kooperiert. Zur Vorgabe einer Schaltstellung greifen lineare Längenabschnitte des Federelementes in die Rastnut des Ventilschiebers ein.

Der Erfindung liegt die Aufgabe zugrunde, ein Ventil zu schaffen, das mit einfach aufgebauten und wenig Platz beanspruchenden Haltemitteln zur Schaltstellungsfixierung des Ventilschiebers ausgestattet ist.

Zur Lösung dieser Aufgabe ist in Verbindung mit den eingangs genannten Merkmalen vorgesehen, dass das einstückige Federelement der Haltefeder ausschließlich zweidimensional in einer Federebene gebogen ist, die rechtwinkelig zur Längsachse der Ventilschieberkammer ausgerichtet ist, wobei das Federelement insgesamt eine im Wesentlichen C-förmige Gestalt hat und einen sich in gekrümmter Form ein Stückweit um die Längsachse der Ventilschieberkammer herum erstreckenden Bogenabschnitt aufweist, an den sich beidenends über jeweils einen ersten Knickbereich ein nach radial innen ragender Verbindungsabschnitt anschließt, an den sich über einen eine bezüglich des ersten Knickbereiches entgegengesetzte Knickrichtung aufweisenden zweiten Knickbereich, von dem Bogenabschnitt wegragend, einer der Rastabschnitte anschließt, wobei ein den Bogenabschnitt des Federelementes aufnehmender Kammerabschnitt der Federkammer durch eine sich ein Stückweit in einer Umfangsrichtung um die Längsachse der Ventilschieberkammer herum erstreckende bogenförmige Zwischenwand des Ventilgehäuses von der Ventilschieberkammer abgetrennt ist, wobei sich an die beiden in der Umfangsrichtung orientierten Endbereiche der Zwischenwand jeweils eine von einem der Rastabschnitte durchgriffene radiale Durchgriffsöffnung anschließt.

Das ausschließlich zweidimensional gebogene Federelement der Haltefeder ist sehr einfach herstellbar und nimmt im Ventilgehäuse in dessen axialer Richtung nur wenig Platz in Anspruch. Folglich können die Haltemittel einfach hergestellt werden und ermöglichen kompakte Abmessungen für das Ventil in seiner Gesamtheit. Der Bogenabschnitt kann mit einem relativ großen Radius ausgeführt werden, sodass er auch bei kleinen Gesamtabmessungen der Haltefeder eine hohe Flexibilität für die federelastische Beweglichkeit der Rastabschnitte beisteuert. Gleichwohl können die Rastnocken mit relativ kleinem radialen Überstand am Ventilschieber angeordnet werden, weil die mit ihnen kooperierenden Rastabschnitte an Verbindungsabschnitten des Federelementes angeordnet sind, die ausgehend von den Endbereichen des Bogenabschnittes beliebig weit nach radial innen ragen können. Ein weiterer Vorteil des mit einem relativ großen Radius ausführbaren Bogenabschnittes besteht darin, dass der Bogenabschnitt gemeinsam mit der Peripherie der Ventilschieberkammer eine relativ große Fläche umrahmt, die nutzbar ist, um eine die Ventilschieberkammer von der Federkammer abtrennende Zwischenwand des Ventilgehäuses zu integrieren, die für eine hohe Steifigkeit und Belastbarkeit des Ventilgehäuses verantwortlich ist.

Vorteilhafte Weiterbildungen der Erfindung gehen aus den Unteransprüchen hervor.

Bevorzugt besteht das einstückige Federelement aus Metall, insbesondere aus einem metallischen Federdraht. Zweckmäßigerweise kommt ein Federstahl zum Einsatz.

Es ist von Vorteil, wenn sich an jeden Rastabschnitt des Federelementes über einen dritten Knickbereich ein nach radial außen ragender Endabschnitt des Federelementes anschließt, der vorzugsweise in die zugeordnete Durchgriffsöffnung hineinragt. Derart nach außen gebogene Endabschnitte erleichtern die Montage der Haltefeder in der Federkammer, weil das Federelement beim seitlichen Aufstecken auf den Ventilschieber durch die mit dem Ventilschieber in Kontakt gelangenden dritten Knickbereiche sanft aufgespreizt wird.

Obgleich es prinzipiell möglich wäre, die Knickbereiche scharfkantig auszubilden, ist es vorteilhaft, wenn sie abgerundet sind.

Der Bogenabschnitt hat zweckmäßigerweise eine derartige Bogenlänge, dass er sich um mehr als 90° und weniger als 180° um die Längsachse der Ventilschieberkammer herum erstreckt. Als besonders zweckmäßig wird eine Bogenlänge von 120° bis 140° angesehen, insbesondere im Bereich von 135°.

Der Bogenabschnitt des Federelementes kann kontinuierlich gekrümmt sein, sodass er durchgehend gerundet ist. Insbesondere bei größeren Abmessungen der Haltefeder, wenn die Haltefeder auf einer entsprechenden Biegemaschine hergestellt wird, kann es aus fertigungstechnischen Gründen jedoch vorteilhaft sein, wenn der Bogenabschnitt einen mehrfach abgeknickten Längsverlauf hat. Er kann sich beispielsweise aus einer Vielzahl über je einen Biegebereich einstückig aneinandergereihter linearer Längenabschnitte kurzer Länge zusammensetzen.

Jeder Rastabschnitt hat vorzugsweise einen gebogenen Längsverlauf, wobei seine konkave Seite dem Ventilschieber zugewandt ist. Auf diese Weise lässt sich erreichen, dass die Rastabschnitte den Ventilschieber formschlüssig umgreifen, sodass die Haltefeder durch diesen Formschluss am Ventilschieber fixiert ist. Insgesamt ist es vorteilhaft, wenn das Federelement in der Federkammer in der zur Längsachse des Ventilschiebers rechtwinkeligen Federebene schwimmend gelagert ist und keine spezielle Abstützung in dieser Federebene erfährt. Das Federelement kann sich dann bei seiner Lage in der Federkammer optimal an der momentanen Ausrichtung des Ventilschiebers orientieren. Toleranzbedingte Lageabweichungen zwischen dem Ventilschieber und dem Ventilgehäuse führen nicht zu einem Verklemmen der Haltefeder im Ventilgehäuse.

Die beiden Rastnocken sind zweckmäßigerweise sich diametral gegenüberliegend am Ventilschieber angeordnet. Es handelt sich bei ihnen zweckmäßigerweise um individuelle Rastnocken, die von lokalen radialen Erhebungen des Ventilschiebers gebildet sind.

Der Ventilschieber ist zweckmäßigerweise verdrehgesichert in der Ventilschieberkammer angeordnet. Die Verdrehsicherung lässt sich insbesondere durch das Zusammenwirken zwischen den Rastabschnitten und den Rastnocken bewirken. Es besteht aber auch die Möglichkeit, am Ventilschieber einen oder mehrere radial abstehende Verdrehsicherungsvorsprünge auszubilden, die gleitverschieblich in jeweils eine zur Ventilkammer hin offene Verdrehsicherungsnut des Ventilgehäuses eingreifen. In diesem Fall nimmt die Haltefeder an der Verdrehsicherungsmaßnahme nicht teil.

Die schlitzförmige Federkammer, deren Schlitzebene rechtwinkelig zur Längsachse der Ventilschieberkammer ausgerichtet ist, ist an ihren in Achsrichtung der Längsachse der Ventilkammer orientierten Stirnseiten zweckmäßigerweise durch je eine vom Ventilgehäuse gebildete Seitenwand begrenzt, an der sich die Haltefeder abstützen kann, um die vom Ventilschieber in sie eingeleitete Kraft in das Ventilgehäuse abzuleiten. Dabei sorgt die Zwischenwand für eine stabile Verbindung zwischen den beiden Seitenwänden, wobei die Integration in den von dem Bogenabschnitt des Federelementes flankierten Bereich den Vorteil hat, dass die Zwischenwand mit einer relativ gro-ßen Wandstärke ausgeführt werden kann, was der Belastbarkeit zugutekommt. Die Zwischenwand sorgt für eine hohe Stabilität des Ventilgehäuses und verhindert Beschädigungen, wenn der Ventilschieber bei seinem Umschaltvorgang mit hoher Intensität auf eine am Gehäuse ausgebildete Abstützfläche aufprallt. Die schlitzförmige Federkammer bewirkt notgedrungen eine Schwächung des Ventilgehäusequerschnittes, wobei allerdings der mit einem relativ großen Radius ausführbare Bogenabschnitt die Möglichkeit bietet, eine Zwischenwand mit großer Wanddicke vorzusehen, die hohe axiale Kräfte aufnehmen kann, sodass die Festigkeit des Ventilgehäuses insgesamt nicht relevant beeinträchtigt wird.

Für das Verformungsverhalten des Federelementes in der Federebene ist es vorteilhaft, wenn der Bogenabschnitt des Federelementes in der Federebene eine geringere Biegesteifigkeit hat als die übrigen Bestandteile des Federelementes. Die beim Rastvorgang stattfindende Auslenkung der Rastabschnitte wird daher maßgeblich durch die elastische Verformung des Bogenabschnittes realisiert.

Ein besonders vorteilhafter Gehäuseaufbau des Ventilgehäuses sieht vor, dass die Ventilschieberkammer in einer Führungshülse ausgebildet ist, die in ein Außengehäuse des Ventilgehäuses eingesetzt ist. Die Federkammer ist dabei vorzugsweise ausschließlich in der Führungshülse ausgebildet und verfügt radial außen, am Außenumfang der Federhülse, über eine das Einsetzen und bei Bedarf auch Entnehmen der Haltefeder ermöglichende Öffnung, die als Kammeröffnung bezeichnet wird. Ist die Führungshülse in das Außengehäuse eingesetzt, wird die Kammeröffnung durch das Außengehäuse abgedeckt und dadurch ein unbeabsichtigtes Herausfallen des Federelementes verhindert.

Zweckmäßigerweise sind die Haltemittel ausgebildet, um nicht nur eine, sondern zwei Schaltstellungen des Ventilschiebers lösbar verrastend zu fixieren. Beim Umschalten des Ventilschiebers verändern die Rastnocken ihre Lage von diesseits zu jenseits der Rastabschnitte. Auf diese Weise können die Rastabschnitte je nach Schaltstellung des Ventilschiebers entweder in der einen oder in der anderen axialen Richtung fixierend wirken. Bevorzugt sind die Rastnocken durch die die Sperrstellung einnehmenden Rastabschnitte axial beaufschlagt, sodass der Ventilschieber gegen eine gehäusefeste Abstützfläche gedrückt wird. Diese gehäusefeste Abstützfläche kann eine eigens der Abstützung dienende gesonderte Fläche sein, wobei allerdings auch die vorteilhafte Möglichkeit besteht, die Abstützfläche durch einen gehäusefesten Ventilsitz zu realisieren, Letzteres insbesondere im Zusammenhang mit einer Ausgestaltung des Ventils als Sitzventil.

Bei dem Ventil handelt es sich zweckmäßigerweise um ein vorgesteuertes Ventil, das mit mindestens einer Vorsteuerventileinheit ausgestattet ist, wobei die Umschaltkraft in wenigstens einer Richtung durch Fluidbeaufschlagung des Ventilschiebers hervorgerufen wird.

Nachfolgend wird die Erfindung anhand der beiliegenden Zeichnung näher erläutert. In dieser zeigen:
- Figur 1: einen ausschnittsweisen Längsschnitt durch eine bevorzugte Ausführungsform des erfindungsgemäßen Ventils in einer Schnittebene gemäß Linie I-I aus Figur 3, wobei der Ventilschieber bei Einnahme einer nach links verlagerten ersten Schaltstellung gezeigt ist,
- Figur 2: einen weiteren Längsschnitt des Ventils in der aus Figur 1 ersichtlichen Schaltstellung des Ventilschiebers und gemäß Schnittlinie II-II aus Figur 3,
- Figur 3: einen Querschnitt durch das Ventil gemäß Schnittlinie III-III aus Figur 1,
- Figur 4: den gleichen Querschnitt wie in Figur 3, allerdings in einer isometrischen Darstellung,
- Figur 5: eine Einzeldarstellung einer teilweise aufgeschnitten abgebildeten Führungshülse des Ventils, bei der es sich um einen Bestandteil des Ventilgehäuses handelt und die gemäß Figuren 1 und 2 normalerweise in ein Außengehäuse des Ventilgehäuses eingesetzt ist, und
- Figur 6: das gleiche Ventil wie in Figuren 1 bis 5 in einem ausschnittsweisen Längsschnitt und in einem in eine in Figur 6 rechts liegende zweite Schaltstellung umgeschalteten Zustand des Ventilschiebers.

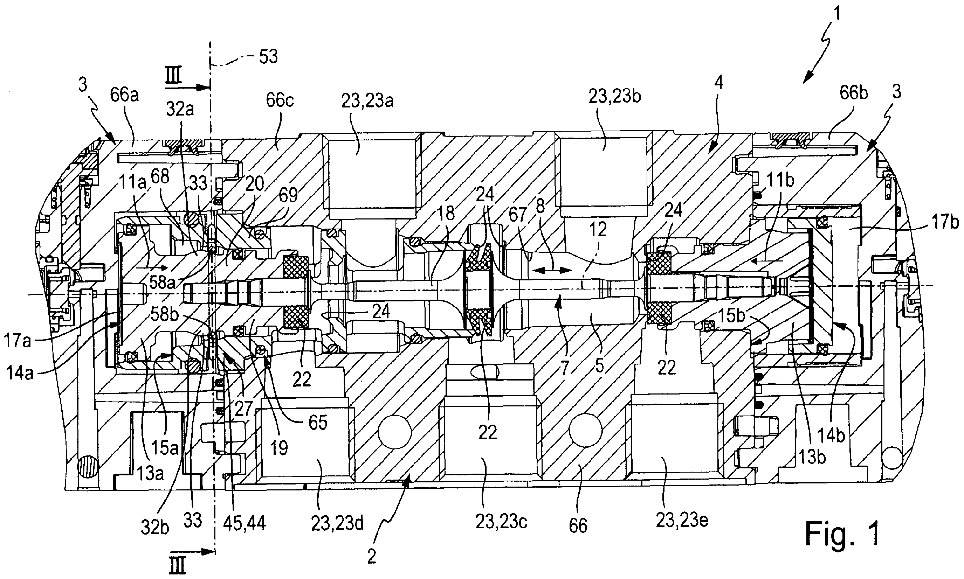

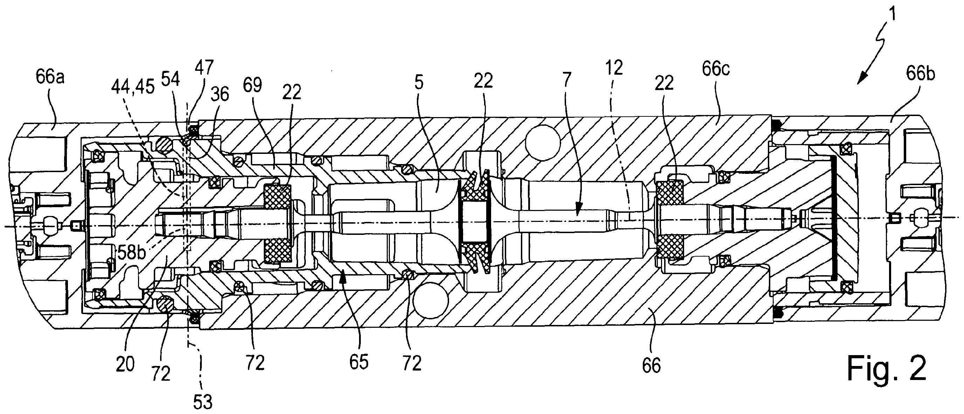

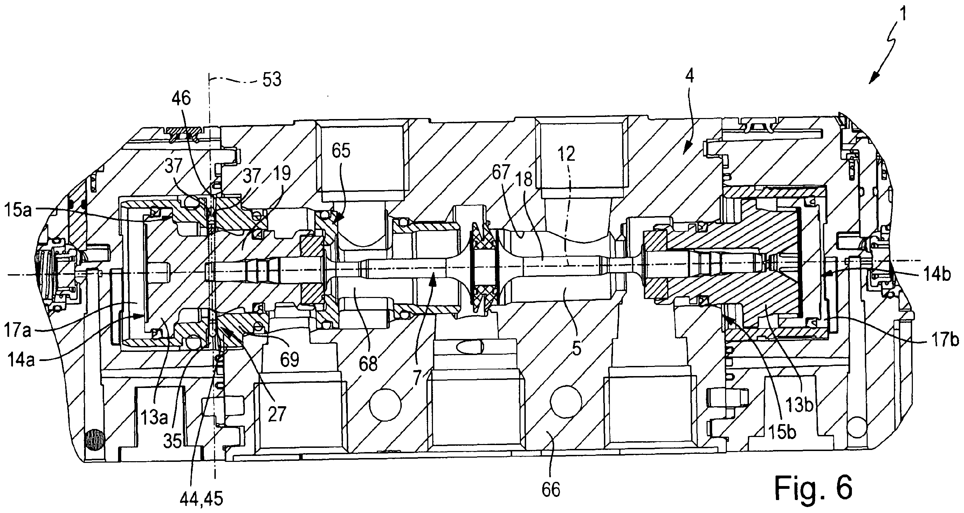

Das beispielhaft illustrierte, erfindungsgemäß aufgebaut Ventil 1 ist funktionell in eine Hauptventileinheit 2 und zwei mit der Hauptventileinheit 2 zu einer Baugruppe zusammengefasste Vorsteuerventileinheiten 3 unterteilt, wobei die Vorsteuerventileinheiten 3 nur partiell illustriert sind. Die Hauptventileinheit 2 umfasst einen länglichen Ventilschieber 7, der mittels Fluidkräften zwischen zwei Schaltstellungen umschaltbar ist, wobei die Figuren 1 bis 5 eine erste Schaltstellung und die Figur 6 eine zweite Schaltstellung des Ventilschiebers 7 zeigen.

Das Ventil 1 verfügt über ein längliches Ventilgehäuse 4, in dem sich ein im Folgenden als Ventilschieberkammer 5 bezeichneter länglicher Hohlraum befindet, in dem in koaxialer Anordnung der Ventilschieber 7 aufgenommen ist. Eine gemeinsame Längsachse der Ventilschieberkammer 5 und des Ventilschiebers 7 ist strichpunktiert bei 12 angedeutet.

Der Ventilschieber 7 kann unter Ausführung einer in der Achsrichtung der Längsachse 12 orientierten linearen Umschaltbewegung 8 zwischen den beiden illustrierten Schaltstellungen umgeschaltet werden.

Die beiden axialen Endabschnitte des Ventilschiebers 7 sind zweckmäßigerweise als Betätigungskolben 13a, 13b ausgebildet und vorzugsweise axial fest mit dem restlichen Bestandteil des Ventilschiebers 7 verbunden. Jeder Betätigungskolben 13a, 13b begrenzt einen als Beaufschlagungskammer 17a, 17b bezeichneten Endabschnitt der Ventilschieberkammer 5, wobei jeder Betätigungskolben 13a, 13b eine der zugeordneten Beaufschlagungskammer 17a, 17b zugewandte Beaufschlagungsfläche 14a, 14b aufweist.

Anstelle der Betätigungskolben 13a, 13b könnte auch jeweils eine Betätigungsmembran vorgesehen sein.

Zum Umschalten des Ventilschiebers 7 wird jeweils kurzzeitig die eine oder andere Beaufschlagungskammer 17a, 17b und mithin die jeweils zugeordnete Beaufschlagungsfläche 14a oder 14b mit einem Steuerfluid beaufschlagt. Aus dieser Fluidbeaufschlagung resultiert eine entsprechend orientierte, in der Zeichnung jeweils durch einen Pfeil angedeutete Umschaltkraft 11a, 11b. Die gewünschte Schaltstellung ist beispielsweise dadurch vorgegeben, dass der bei der Umschaltbewegung jeweils nacheilende der beiden Betätigungskolben 13a, 13b auf eine ihm axial gegenüberliegende Abstützfläche 15a, 15b des Ventilgehäuses 4 aufläuft.

Die axiale Beaufschlagung des Ventilschiebers 7 mit dem erwähnten Steuerfluid ist durch die beiden Vorsteuerventileinheiten 3 steuerbar. Sie sind exemplarisch an den einander entgegengesetzten Stirnseiten der Hauptventileinheit 2 installiert, können sich aber auch an ein und derselben Stirnseite der Hauptventileinheit 2 befinden. Jede Vorsteuerventileinheit 3 ist zweckmäßigerweise elektrisch betätigbar und besteht insbesondere aus einem 3/2-Wegeventil, das in der Lage ist, die mit ihm verbundene Beaufschlagungskammer 17a beziehungsweise 17b wahlweise mit einem Steuerfluid zu beaufschlagen oder druckmäßig zu entlasten. Vorzugsweise handelt es sich bei den Vorsteuerventileinheiten 3 um Magnetventile oder um Piezoventile.

Die Wandung des Ventilgehäuses 4 ist von mehreren zur Führung eines Fluides geeigneten Ventilkanälen 23 durchsetzt. Sie münden jeweils mit ihrem einen Ende an axial beabstandeten Stellen in die Ventilschieberkammer 5 ein. Andernends führen sie zu einer Außenfläche des Ventilgehäuses 4. Abhängig von der Schaltstellung des Ventilschiebers 7 sind die Ventilkanäle 23 in unterschiedlichem Muster miteinander verbunden und voneinander abgetrennt. Exemplarisch umfassen die Ventilkanäle 23 zwei jeweils mit einem zu betätigenden Verbraucher verbindbare Arbeitskanäle 23a, 23b, einen mit einer externen Druckquelle verbindbaren Speisekanal 23c und zwei mit einer Drucksenke, insbesondere mit der Atmosphäre, verbundene oder verbindbare Entlastungskanäle 23d, 23e. In den beiden Schaltstellungen des Ventilschiebers 7 sind die beiden Arbeitskanäle 23a, 23b abwechselnd mit dem Speisekanal 23c verbunden, wobei der momentan nicht mit dem Speisekanal 23c verbundene Arbeitskanal 23a oder 23b mit einem der beiden Entlastungskanäle 23d, 23e verbunden ist.

Für die Steuerung der Fluidverbindungen sind mehrere in der Ventilschieberkammer 5 befindliche, mit axialem Abstand zueinander angeordnete Verschlussabschnitte 22 des Ventilschiebers 5 verantwortlich, die mit am Ventilgehäuse 4 angeordneten Ventilsitzen 24 kooperieren. Vorzugsweise ist das Ventil 1 als ein sogenanntes Sitzventil ausgebildet, bei dem die Ventilsitze 24 axial in der Richtung der Umschaltbewegung 8 orientiert sind, wobei die Verschlussabschnitte 22 je nach Schaltstellung des Ventilschiebers 7 ausgewählt unter Absperrung eines Fluiddurchgangs an einem der Ventilsitze 24 anliegen oder unter Freigabe dieses Fluiddurchgangs von dem betreffenden Ventilsitz 24 abgehoben sind.

Die oben erwähnte Abstützfläche 15a, 15b kann auch von einem der Ventilsitze 24 gebildet sein.

Das Konzept des Ventils 1 kann auch vorsehen, dass der Ventilschieber 7 mit radial orientierten Ventilsitzen oder Steuerkanten kooperiert, um Fluiddurchgänge wahlweise freizugeben oder abzusperren.

Das Ventil 1 ist insbesondere ein Impulsventil, wobei der Ventilschieber 7 nur zum Zwecke des Umschaltens mit einer Umschaltkraft 11a oder 11b beaufschlagt werden muss. Ist eine der beiden Schaltstellungen erreicht, verharrt der Ventilschieber 7 in der entsprechenden Position auch dann, wenn die ihn in diese Position verbrachte Umschaltkraft 11a, 11b entfernt wird. Der Ventilschieber 7 bleibt also auch ohne eine ständige Energiezufuhr in der jeweils gewählten Schaltstellung, bis er einen neuerlichen Umschaltimpuls erhält.Bei einem direkt gesteuerten Ventil kann die exemplarisch fluidisch aufgebrachte Umschaltkraft 11a, 11b auch mechanisch oder elektromechanisch in den Ventilschieber 7 eingeleitet werden.

Zur lösbaren Fixierung des Ventilschiebers 7 in seinen beiden Schaltstellungen ist das Ventil 1 mit in ihrer Gesamtheit mit Bezugsziffer 27 bezeichneten Haltemitteln 27 ausgestattet. Die Haltemittel 27 fixieren den Ventilschieber 7 in jeder Schaltstellung so lange, bis eine das Umschalten in die andere Schaltstellung hervorrufende Umschaltkraft 11a, 11b aufgebracht wird, die die Haltekraft der Haltemittel 27 überwindet.

Zu den Haltemitteln 27 gehören zwei im Bereich des peripheren Außenumfanges des Ventilschiebers 7 angeordnete erste und zweite Rastnocken 32a, 32b. Selbige sind axial unbeweglich am Ventilschieber 7 angeordnet und nur gemeinsam synchron mit dem Ventilschieber 7 axial bewegbar. Die beiden Rastnocken 32a, 32b befinden sich zweckmäßigerweise an einander diametral entgegengesetzten Bereichen des Außenumfanges des Ventilschiebers 7, ragen also bezogen auf die Längsachse 12 in einander entgegengesetzte Richtungen radial vom Ventilschieber 7 weg. In Achsrichtung der Längsachse 12 liegen sie auf der gleichen Höhe.

Jede Rastnocke 32a, 32b steht jeweils radial über sich diesseits und jenseits axial anschließende Längenabschnitte des Ventilschiebers 7 hinaus. Zweckmäßigerweise verfügt jede Rastnocke 32a, 32b über einen Scheitelbereich 33 mit einem maximalen Radialabstand zur Längsachse 12, an den sich axial zu beiden Seiten hin jeweils ein Schrägabschnitt anschließt, dessen Abstand zur Längsachse 12 mit zunehmender axialer Entfernung vom Scheitelbereich 33 abnimmt.

Exemplarisch verfügt der Ventilschieber 7 über einen mit den Verschlussabschnitten 22 bestückten stangenförmigen Steuerabschnitt 18, an dem an beiden Stirnseiten jeweils einer der Betätigungskolben 13a, 13b befestigt ist. Die beiden Rastnocken 32a, 32b sind insbesondere ein und demselben Endabschnitt des Ventilschiebers 7 zugeordnet und sind vorzugsweise Bestandteile eines stirnseitig an dem Steuerabschnitt 18 befestigten Kopfelementes 19, in dem der zugeordnete Betätigungskolben 13a und ein sich axial in Richtung zum Steuerabschnitt 18 daran anschließender Nockenträgerkörper 20 integriert sind. Der Nockenträgerkörper 20 weist die Rastnocken 32a, 32b auf und ist zweckmäßigerweise auf den Steuerabschnitt 18 des Ventilschiebers 7 aufgesteckt.

Die Haltemittel 27 verfügen als weitere Komponente über eine im Ventilgehäuse 4 angeordnete Haltefeder 44. Die Haltefeder 44 ist im axialen Hubbereich der Rastnocken 32a, 32b platziert. Sie besteht aus einem einstückigen, gebogenen Federelement 45, das insbesondere aus einem metallischen Federdraht besteht und in die gewünschte Form gebogen ist. Die Haltefeder 44 beziehungsweise das Federelement 45 sitzt in einer sich zumindest ein Stückweit in einer Umfangsrichtung 34 um die Ventilschieberkammer 5 herum erstreckenden, schlitzförmig schmalen Ausnehmung im Innern des Ventilgehäuses 4, die als Federkammer 35 bezeichnet sei. Bei der Umfangsrichtung 34 handelt es sich um die Richtung rings um die Längsachse 12.

Die Federkammer 35 erstreckt sich in einer zu der Längsachse 12 rechtwinkeligen Ebene. Zur Ventilschieberkammer 5 hin ist sie partiell durch eine sich ein Stückweit in der Umfangsrichtung 34 erstreckende bogenförmige Zwischenwand 36 abgetrennt, wobei das Bogenzentrum der Zwischenwand 36 auf der Seite der Längsachse 12 und insbesondere unmittelbar auf der Längsachse 12 liegt. Bevorzugt erstreckt sich die Zwischenwand 36 über eine Bogenlänge, die größer als 90° und kleiner als 180° ist, wobei sie insbesondere zwischen 110° und 120° beträgt.

Seitlich, an den bezüglich der Längsachse 12 axial liegenden Seiten, ist die Federkammer 35 von zwei sich in Achsrichtung der Längsachse 12 mit Abstand gegenüberliegenden und einander zugewandten Seitenwänden 37 begrenzt, die auch vom Ventilgehäuse 4 gebildet sind. Mit Bezug zu der Längsachse 12 radial außen weist die Federkammer 35 eine sich in der Umfangsrichtung 34 erstreckende Öffnung auf, die als Kammeröffnung 46 bezeichnet sei und die von einer ebenfalls vom Ventilgehäuse 4 gebildeten Abdeckwand 47 abgedeckt beziehungsweise überdeckt ist. Die zweckmäßigerweise ausschließlich aus dem Federelement 45 bestehende Haltefeder 44 ist vor der Anbringung der Abdeckwand 47 durch die dann freiliegende Kammeröffnung 46 hindurch in die Federkammer 35 eingesetzt worden.

An die beiden einander entgegengesetzt in der Umfangsrichtung 34 orientierten Endbereiche 48 der Zwischenwand 37 schließt sich jeweils eine radial durchgehende Durchgriffsöffnung 52 an, die jeweils eine radiale Verbindung zwischen der Federkammer 35 und der Ventilschieberkammer 5 herstellt.

Die beiden Durchgriffsöffnungen 52 liegen sich bezüglich der Längsachse 12 zweckmäßigerweise diametral gegenüber. Jeder Durchgriffsöffnung 52 ist im Innern der Ventilschieberkammer 5 eine der beiden Rastnocken 32a, 32b zugeordnet. Bevorzugt liegt jede Rastnocke 32a, 32b in der Ventilschieberkammer 5 radial innerhalb der zugeordneten Durchgriffsöffnung 52.

Die Federkammer 35 hat zweckmäßigerweise eine in der Umfangsrichtung 34 gebogene Form. Ihre Bogenlänge ist zweckmäßigerweise etwas größer als 180° und liegt beim Ausführungsbeispiel bei etwa 230°.

Die beiden Seitenwände 37 sind durch die Zwischenwand 36 miteinander verbunden.

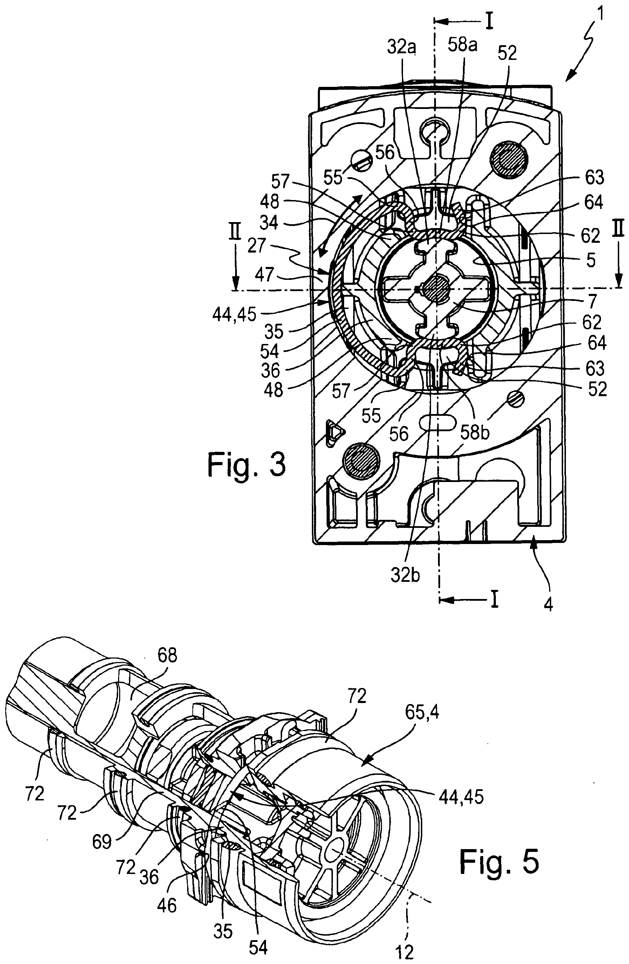

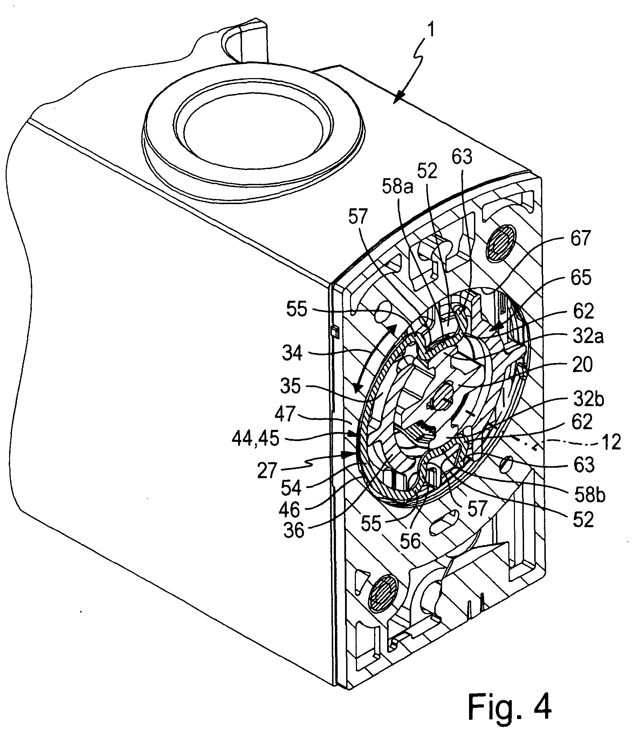

Wie insbesondere die Figuren 3 und 4 verdeutlichen, hat das einstückige Federelement 45 eine im Wesentlichen C-förmige Gestalt und ist zum Erhalt dieser im Wesentlichen C-Form gebogen ausschließlich zweidimensional gebogen. Das Federelement 45 erstreckt sich ausschließlich in einer einzigen Ebene, die als Federebene 53 bezeichnet sei. Das Federelement 45 sitzt derart in der Federkammer 35, dass seine Federebene 53 rechtwinkelig zur Längsachse 12 der Ventilschieberkammer ausgerichtet ist. Die C-Öffnung des Federelementes 45 ist der Längsachse 12 zugewandt. Das Federelement 45 erstreckt sich in der Umfangsrichtung 34 ein Stückweit um den Ventilschieber 5 herum.

Ein bevorzugter Aufbau des Federelementes 45 sieht vor, dass das Federelement 45 einen als Bogenabschnitt 54 bezeichneten bogenförmigen Längenabschnitt hat, der sich in bogenförmig gekrümmter Form ein Stückweit in der Umfangsrichtung 34 erstreckt. Der Bogenabschnitt 54 befindet sich in demjenigen Kammerabschnitt der Federkammer 35, der radial innen von der Zwischenwand 36 begrenzt ist.

An beide in der Umfangsrichtung 34 orientierte Endbereiche des Bogenabschnittes 54 schließt sich über einen ersten Knickbereich 55 jeweils ein nach radial innen ragender Längenabschnitt des Federelementes 45 an, der als Verbindungsabschnitt 56 bezeichnet sei. Jeder Verbindungsabschnitt 56 ist einem der Endbereiche 48 der Zwischenwand 36 zugeordnet und ragt im Anschluss an den zugeordneten Endbereich 48 in die sich dort anschließende Durchgriffsöffnung 52 hinein und insbesondere radial durch die Durchgriffsöffnung 52 hindurch.

An jeden Verbindungsabschnitt 56 schließt sich über einen weiteren, zweiten Knickbereich 57 einer von zwei länglichen Rastabschnitten 58a, 58b des Federelementes 45 an, die im Folgenden auch als erster Rastabschnitt 58a und zweiter Rastabschnitt 58b bezeichnet werden. Die Knickrichtung des zweiten Knickbereiches 57 ist entgegengesetzt zu derjenigen des ersten Knickbereiches 55, wobei der Knickwinkel vorzugsweise bei etwa 90° liegt. Jeder Rastabschnitt 58a, 58b ragt ausgehend von dem zweiten Knickbereich 57 in der Federebene 53 von dem Bogenabschnitt 54 weg.

Die beiden Rastabschnitte 58a, 58b liegen jeweils im Bereich einer der beiden Durchgriffsöffnungen 52. Dadurch, dass sie an dem Verbindungsabschnitt 56 angeordnet sind, ragen sie durch die Durchgriffsöffnung 52 hindurch in die Ventilschieberkammer 5 hinein, wo sie den darin befindlichen Ventilschieber 7 auf diametral entgegengesetzten Seiten flankieren.

Zweckmäßigerweise schließt sich an jeden Rastabschnitt 58a, 58b an der dem zweiten Knickbereich 57 entgegengesetzten Seite über einen dritten Knickbereich 62 ein nach radial außen ragender Endabschnitt 63 des Federelementes 45 an. Die Knickrichtung im dritten Knickbereich 62 ist die gleiche wie im zweiten Knickbereich 57. Der Endabschnitt 63 ragt von radial innen her in die zugeordnete Durchgriffsöffnung 52 hinein. Bevorzugt erstreckt sich jeder Endabschnitt 63 mit schrägem Verlauf nach radial außen und zugleich in Richtung zu dem Bogenabschnitt 54. Sämtliche Knickbereiche 55, 57, 62 sind zweckmäßigerweise abgerundet. Das Federelement 45 ist in jedem Knickbereich 55, 57, 62 zweckmäßigerweise abgebogen, wobei der Biegeradius wesentlich kleiner ist als der Radius des Bogenabschnittes 54.

Der Bogenabschnitt 54 erstreckt sich zweckmäßigerweise über eine Bogenlänge, die größer ist als 90° und geringer ist als 180°. Als besonders zweckmäßig wird eine Erstreckung entlang eines Bogenwinkels im Bereich von 120° bis 140° angesehen.

Bei seiner Montage wird das Federelement 45 mit seiner C-Öffnung voraus durch die freiliegende Kammeröffnung 46 hindurch in die Federkammer 35 eingeführt. Da der Abstand zwischen den beiden Rastabschnitten 58a, 58b zweckmäßigerweise etwas kleiner ist als der direkt gemessene Abstand zwischen den beiden Endbereichen 48 der Zwischenwand 36, wird das Federelement 45 bei seiner Montage mit den Rastabschnitten 58a, 58b in die Durchgriffsöffnungen 52 eingerastet.

Jede Durchgriffsöffnung 52 ist in der Umfangsrichtung 34 einenends von einem der Endbereiche 48 und gegenüberliegend von einem Begrenzungswandabschnitt 64 des Ventilgehäuses 4 begrenzt. Zweckmäßigerweise liegt das Federelement 45 mit jedem dritten Knickbereich 62 und/oder mit jedem Endabschnitt 63 an einem der Begrenzungswandabschnitte 64 an und erfährt dadurch eine zuverlässige Verdrehsicherung bezüglich der Längsachse 12.

Beide Rastabschnitte 58a, 58b liegen mit radialer Vorspannung im Bereich der beiden Rastnocken 32a, 32b am Außenumfang des Ventilschiebers 7 an, exemplarisch am Außenumfang des Kopfelementes 19.

In der aus Figuren 1 bis 5 ersichtlichen ersten Schaltstellung des Ventilschiebers 7 sind die beiden Rastabschnitte 58a, 58b der jeweils zugeordneten Rastnocke 32a, 32b auf einer Seite in Achsrichtung der Längsachse 12 axial vorgelagert. Sie liegen insbesondere axial neben dem Scheitelbereich 33. Aufgrund der Ausgestaltung des Federelementes 45 liegen die Rastabschnitte 58a, 58b in dieser im Folgenden als Sperrstellung bezeichneten Stellung zweckmäßigerweise bereits mit einer gewissen Federvorspannung an den sich an den Scheitelbereich 33 anschließenden Schrägabschnitten des Ventilschiebers 5 an.

Der bezüglich der Längsachse 12 geneigte Verlauf der vorgenannten Schrägabschnitte ist dafür verantwortlich, dass der Ventilschieber 7 durch die in der Sperrstellung erfolgende Beaufschlagung seitens der Rastabschnitte 58a, 58b eine axiale Beaufschlagung erfährt, die ihn gegen die eine gehäusefeste Abstützfläche 15b drückt, wodurch die erste Schaltstellung unverrückbar festgehalten ist.

Zum Umschalten in die zweite Schaltstellung wird der Ventilschieber 7 mit einer in Figur 1 nach rechts gerichteten Umschaltkraft 11a beaufschlagt. Dies führt dazu, dass der in der Umschaltrichtung vorauseilende Schrägabschnitt der Rastnocken 32a, 32b die beiden Rastabschnitte 58a, 58b und mithin den Bogenabschnitt 54 mehr und mehr auseinanderspreizt, bis kurzzeitig eine Freigabestellung vorliegt, die es auch den Scheitelbereichen 33 der Rastnocken 32a, 32b ermöglicht, zwischen den gegen eine federnde Rückstellkraft auseinandergespreizten Rastabschnitten 58a, 58b hindurchzurutschen.

Von dem Moment an, zu dem die Scheitelbereiche 33 der Rastnocken 32a, 32b die Rastabschnitte 58a, 58b passiert haben, drücken die Rastabschnitte 58a, 58b aufgrund ihrer federnden Vorspannung gegen die in der Bewegungsrichtung nacheilenden Schrägabschnitte der Rastnocken 32a, 32b und drücken dadurch den Ventilschieber 7 fest in die zweite Schaltstellung gemäß Figur 6.

Das Zurückschalten in die erste Schaltstellung geschieht in der gleichen Weise in umgekehrter Reihenfolge, ausgelöst durch die in Figur 1 angedeutete, nach links wirkende Umschaltkraft 11b.

Somit sind durch das Zusammenwirken der Rastabschnitte 58a, 58b und der Rastnocken 32a, 32b beide Schaltstellungen des Ventilschiebers 7 in verrastender Weise lösbar fixierbar. Das Federelement 45 kann sich in der Federkammer 35 an den beiden Seitenwänden 37 in Achsrichtung der Längsachse 12 gegenüber dem Ventilgehäuse 4 abstützen.

Zweckmäßigerweise sind die Rastnocken 32a, 32b an ihrer den Rastabschnitten 58a, 58b zugewandten Außenseite in der Umfangsrichtung 34 konvex gekrümmt. Jeder Rastabschnitt 58a, 58b hat zweckmäßigerweise zumindest partiell einen gebogenen Längsverlauf, wobei die konkave Seite dem Ventilschieber 7 und mithin der jeweils zugeordneten Rastnocke 32a, 32b zugewandt ist. Somit kann jede Rastnocke 32a, 32b formschlüssig in den konkaven Bereich des zugeordneten Rastabschnittes 58a, 58b eintauchen, wodurch sich eine Verdrehsicherung des Ventilschiebers 7 bezüglich des Ventilgehäuses 4 einstellt.

Es besteht die zusätzliche oder alternative Möglichkeit, den Ventilschieber 7 zum Erhalt seiner Verdrehsicherung mit einem oder mehreren radial abstehenden Verdrehsicherungsvorsprüngen auszustatten, die gleitverschieblich in jeweils eine zur Ventilschieberkammer 5 offene Verdrehsicherungsnut des Ventilgehäuses 4 eingreifen.

Dadurch, dass der Bogenabschnitt 54 eine relativ große Bogenlänge und auch einen relativ großen Biegeradius hat, ist er wesentlich elastischer als die anderen Abschnitte des Federelementes 45. Die hauptsächliche elastische Biegeverformung beim Verändern der Schaltstellung des Ventilschiebers findet daher in dem Bogenabschnitt 54 statt, der vorübergehend aufgeweitet wird. In diesem Zusammenhang ist es vorteilhaft, wenn der Krümmungsradius des Bogenabschnittes 54 etwas kleiner ist als der Krümmungsradius der bogenförmigen Federkammer 35.

Bevorzugt hat das Ventil 1 einen mehrteiligen Gehäuseaufbau, der der Realisierung der Haltemittel 27 zugute kommt. Gemäß diesem mehrteiligen Gehäuseaufbau umfasst das Ventilgehäuse 4 unter anderem eine in ihrer axialen Richtung mehrfach radial abgestufte Führungshülse 65 und außerdem ein Außengehäuse 66, in das die Führungshülse 65 eingesetzt ist.

Das Außengehäuse 66 hat eine zu der Längsachse 12 koaxiale längliche Gehäuseausnehmung 67, in die die Führungshülse 65 von einer Stirnseite her koaxial eingesetzt ist. Die Länge der Führungshülse 65 ist geringer als die Länge der Gehäuseausnehmung 67. Gemeinsam bilden der Innenraum 68 der Führungshülse 65 und der sich daran anschließend Längenabschnitt der Gehäuseausnehmung 67 die Ventilschieberkammer 5.

Die schlitzförmige Federkammer 35 ist zweckmäßigerweise ausschließlich in der Führungshülse 65 ausgebildet. Ihre Schlitzebene verläuft rechtwinkelig zur Längsachse der Führungshülse 65. Die Führungshülse 65 hat eine den Innenraum 68 peripher umschließende Hülsenwand 69, deren Außenumfang mit mehreren axial beabstandeten Ringnuten versehen ist, in die Dichtungen 72 eingesetzt sind, die gegenüber der Innenumfangsfläche der Gehäuseausnehmung 67 abdichten. Die schlitzförmige Federkammer 35 ist in dieser Hülsenwand 69 ausgebildet, wobei sowohl die beiden Seitenwände 37 als auch die Zwischenwand 36 ein einstückiger Bestandteil der Hülsenwand 69 sind. Die Federkammer 35 mündet mit der Kammeröffnung 46 zum peripheren Außenumfang der Hülsenwand 69 aus, wobei die die Kammeröffnung 46 abdeckende Abdeckwand 47 ein Bestandteil des Außengehäuses 66 ist. Konkret ist die Abdeckwand 47 von demjenigen Wandabschnitt des Außengehäuses 66 gebildet, der die Gehäuseausnehmung 67 im Bereich der Federkammer 35 radial au-ßen umschließt.

Zweckmäßigerweise verfügt das Außengehäuse 66 über einen Mittelabschnitt 66c und zwei axial an entgegengesetzten Stirnseiten des Mittelabschnittes 66c angebaute, bevorzugt kappenartig ausgebildete Endabschnitte 66a, 66b. Die in die Gehäuseausnehmung 67 eingesetzte Führungshülse 65 ragt aus dem Mittelabschnitt 66c heraus und in den zugeordneten Endabschnitt 66a hinein. Dabei liegt die Federkammer 35 axial au-ßerhalb des Mittelabschnittes 66c, sodass sich das Federelement 45 bei abgenommenem Endabschnitt 66a bequem durch die dann zugängliche Kammeröffnung 46 hindurch in die Federkammer 65 einsetzen lässt. Anschließend wird der Endabschnitt 66a aufgesetzt und dadurch die quer zur Längsachse 12 orientierte Kammeröffnung 46 verschlossen.

Die Zwischenwand 36 verbindet axial beidseits der Federkammer 35 liegende Längenabschnitte der Führungshülse 65. Im Betrieb des Ventils 1 ist die Hülsenwand 69 durch die Aufprallwucht des Ventilschiebers 7 hohen Belastungen ausgesetzt. Eine Belastungsspitze ergibt sich dabei im Bereich der Federkammer 35 aufgrund der hier verringerten Wandstärke. Der große Radius des Bogenabschnittes 54 des Federelementes 45 und der entsprechend große Radius der Federkammer 35 ermöglicht es jedoch, die Zwischenwand 36 mit einer großen radialen Wanddicke und in der Umfangsrichtung 34 mit einer relativ großen Länge auszustatten, sodass die auftretenden Belastungen problemlos aufgenommen werden können.

Beim Ausführungsbeispiel ist der Bogenabschnitt 54 des Federelementes 45 kontinuierlich gekrümmt, weist also eine über seine Bogenlänge hinweg durchgehende Rundung auf. Aus herstellungstechnischen Gründen kann es allerdings vorteilhaft sein, den Bogenabschnitt 54 dadurch in seine gebogene Form zu bringen, dass ein zugrundeliegender Federdraht über seine Länge hinweg mehrfach lokal geringfügig abgeknickt oder abgebogen wird, sodass der Bogenabschnitt 54 letztlich eine Vielzahl linearer Längenabschnitte aufweist, die über gebogene Zwischenabschnitte ineinander übergehen. Eine derartige Herstellung des Bogenabschnittes 54 ist auf einer dafür ausgelegten Bearbeitungsmaschine in der Regel einfacher zu realisieren als eine kontinuierliche Rundung.

## Patentansprüche

1. Ventil, mit einem Ventilgehäuse (4), in dem eine eine Längsachse (12) aufweisende Ventilschieberkammer (5) ausgebildet ist, in der ein durch Auferlegung einer Umschaltkraft (11a, 11b) unter Ausführung einer axialen Umschaltbewegung (8) zwischen mehreren Schaltstellungen umschaltbarer Ventilschieber (7) angeordnet ist, und mit Haltemitteln (27) zum lösbar verrasteten gehäusefesten Fixieren des Ventilschiebers (7) in wenigstens einer seiner Schaltstellungen, die eine aus einem gebogenen einstückigen Federelement (45) bestehende Haltefeder (44) aufweisen, die in eine sich wenigstens ein Stückweit um die Ventilschieberkammer (5) herum erstreckende schlitzförmige Federkammer (35) des Ventilgehäuses (4) eingesetzt ist und die zwei in die Ventilschieberkammer (5) hineinragende, den Ventilschieber (7) auf diametral entgegengesetzten Seiten flankierende Rastabschnitte (58a, 58b) aufweist, denen jeweils eine axial unbeweglich am Ventilschieber (7) angeordnete Rastnocke (32a, 32b) zugeordnet ist und die jeweils entgegen einer rückstellend wirkenden Federkraft der Haltefeder (44) vorübergehend aus einer die zugeordnete Rastnocke (32a, 32b) hintergreifenden und dadurch den Ventilschieber (7) axial fixierenden Sperrstellung in eine das Vorbeibewegen der zugeordneten Rastnocke (32a, 32b) und somit das Umschalten des Ventilschiebers (7) ermöglichende Freigabestellung auslenkbar sind, wenn der Ventilschieber (7) in der entsprechenden axialen Richtung mit einer Umschaltkraft (11a, 11b) beaufschlagt wird, **dadurch gekennzeichnet, dass** das einstückige Federelement (45) der Haltefeder (44) ausschließlich zweidimensional in einer Federebene (53) gebogen ist, die rechtwinkelig zur Längsachse (12) der Ventilschieberkammer (5) ausgerichtet ist, wobei das Federelement (45) insgesamt eine im Wesentlichen C-förmige Gestalt hat und einen sich in gekrümmter Form ein Stückweit um die Längsachse (12) der Ventilschieberkammer (5) herum erstreckenden Bogenabschnitt (54) aufweist, an den sich beidenends über jeweils einen ersten Knickbereich (55) ein nach radial innen ragender Verbindungsabschnitt (56) anschließt, an den sich über einen eine bezüglich des ersten Knickbereiches (55) entgegengesetzte Knickrichtung aufweisenden zweiten Knickbereich (57), von dem Bogenabschnitt (54) wegragend, einer der Rastabschnitte (58a, 58b) anschließt, wobei ein den Bogenabschnitt (54) des Federelementes (45) aufnehmender Kammerabschnitt der Federkammer (35) durch eine sich ein Stückweit in einer Umfangsrichtung (34) um die Längsachse (12) der Ventilschieberkammer (5) herum erstreckende bogenförmige Zwischenwand (36) des Ventilgehäuses (4) von der Ventilschieberkammer (5) abgetrennt ist, wobei sich an die beiden in der Umfangsrichtung (34) orientierten Endbereiche (48) der Zwischenwand (36) jeweils eine von einem der Rastabschnitte (58a, 58b) durchgriffene radiale Durchgriffsöffnung (52) anschließt.

2. Ventil nach Anspruch 1, **dadurch gekennzeichnet, dass** das einstückige Federelement (45) aus einem metallischen Federdraht besteht

3. Ventil nach Anspruch 1 oder 2, **dadurch gekennzeichnet, dass** sich an jeden Rastabschnitt (58a, 58b) über einen dritten Knickbereich (62) ein nach radial außen ragender Endabschnitt (63) des Federelementes (45) anschließt, der zweckmä-ßigerweise von innen her in die zugeordnete Durchgriffsöffnung (52) hineinragt.

4. Ventil nach einem der Ansprüche 1 bis 3, **dadurch gekennzeichnet, dass** der Bogenabschnitt (54) eine Bogenlänge von größer als 90° und weniger als 180° aufweist, wobei die Bogenlänge zweckmäßigerweise bei 120° bis 140° liegt, und/oder dass die Knickereiche (55, 57, 62) des Federelementes (45) abgerundet sind.

5. Ventil nach einem der Ansprüche 1 bis 4, **dadurch gekennzeichnet, dass** der Bogenabschnitt (54) des Federelementes (45) über seine gesamte Länge hinweg kontinuierlich gekrümmt ist.

6. Ventil nach einem der Ansprüche 1 bis 5, **dadurch gekennzeichnet, dass** jeder Rastabschnitt (58a, 58b) einen zumindest partiell gebogenen Längsverlauf hat, wobei die konkave Seite dem Ventilschieber (7) zugewandt ist.

7. Ventil nach einem der Ansprüche 1 bis 6, **dadurch gekennzeichnet, dass** die beiden Rastnocken (32a, 32b) sich diametral gegenüberliegend am Ventilschieber (7) angeordnet sind.

8. Ventil nach einem der Ansprüche 1 bis 7, **dadurch gekennzeichnet, dass** der Ventilschieber (7) verdrehgesichert in der Ventilschieberkammer (5) angeordnet ist, wobei die Verdrehsicherung zweckmäßigerweise durch das Zusammenwirken zwischen den Rastabschnitten (58a, 58b) und den Rastnocken (32a, 32b) bewirkt wird.

9. Ventil nach einem der Ansprüche 1 bis 8, **dadurch gekennzeichnet, dass** die schlitzförmige Federkammer (35) zwei sich in Achsrichtung der Längsachse (12) der Ventilschieberkammer (5) mit Abstand gegenüberliegende, vom Ventilgehäuse (4) gebildete Seitenwände (37) aufweist, an denen sich die Haltefeder (44) abstützen kann und die durch die Zwischenwand (36) miteinander verbunden sind.

10. Ventil nach einem der Ansprüche 1 bis 9, **dadurch gekennzeichnet, dass** der Bogenabschnitt (54) des Federelementes (45) in der Federebene (53) eine geringere Biegesteifigkeit hat als die sich daran anschließenden Abschnitte des Federelementes (45).

11. Ventil nach einem der Ansprüche 1 bis 10, **dadurch gekennzeichnet, dass** das Ventilgehäuse (4) eine zumindest einen Längenabschnitt der Ventilschieberkammer (5) definierende und den Ventilschieber (7) zumindest partiell aufnehmende Führungshülse (65) aufweist und außerdem über ein die Führungshülse (65) umschließendes Außengehäuse (66) verfügt, in das die Führungshülse (65) eingesetzt ist.

12. Ventil nach Anspruch 11, **dadurch gekennzeichnet, dass** die schlitzförmige Federkammer (35) ausschließlich in der Führungshülse (65) ausgebildet ist und radial außen eine Kammeröffnung (46) aufweist, die von dem die Führungshülse (65) aufnehmenden Außengehäuse (66) abgedeckt ist.

13. Ventil nach einem der Ansprüche 1 bis 12, **dadurch gekennzeichnet, dass** durch das Zusammenwirken der Rastabschnitte (58a, 58b) mit den Rastnocken (32a, 32b) zwei Schaltstellungen des Ventilschiebers (7) fixierbar sind, in denen die beiden Rastabschnitte (58a, 58b) den Rastnocken (32a, 32b) jeweils gleichzeitig auf entweder der einen oder der anderen Axialseite vorgelagert sind.

14. Ventil nach einem der Ansprüche 1 bis 13, **dadurch gekennzeichnet, dass** die Rastnocken (32a, 32b) durch die die Sperrstellung einnehmenden Rastabschnitte (58a, 58b) axial beaufschlagt sind, wodurch der Ventilschieber (7) zur Fixierung seiner Schaltstellung gegen eine gehäusefeste Abstützfläche (15a, 15b) gedrückt wird.

15. Ventil nach einem der Ansprüche 1 bis 14, **dadurch gekennzeichnet, dass** es sich um ein vorgesteuertes Ventil handelt, das mit mindestens einer Vorsteuerventileinheit (3) ausgestattet ist, wobei die Umschaltkraft (11a, 11b) in wenigstens einer Richtung durch Fluidbeaufschlagung des Ventilschiebers (7) hervorgerufen wird.

## Claims

1. Valve, comprising a valve housing (4) in which a valve spool chamber (5) having a longitudinal axis (12) is formed, in which valve spool chamber (5) there is located a valve spool (7) switchable between several switching positions while performing an axial switch-over movement (8), and further comprising holding means (27) for the releasably latched fixing of the valve spool (7) relative to the housing in at least one of its switching positions, which holding means (27) comprise a holding spring (44), which consists of a bent one-piece spring element (45) and is installed into a slot-shaped spring chamber (35) - extending at least to a certain extent around the valve spool chamber (5) - of the valve housing (4), and which comprises two latching sections (58a, 58b), which extend into the valve spool chamber (5) and flank the valve spool (7) on diametrically opposite sides, to each of which is assigned a latching cam (32a, 32b) located on the valve spool (7) in an axially immovable manner, and each of which can be temporarily deflected against a restoring spring force of the holding spring (44) from a locking position, in which the associated latching cam (32a, 32b) is engaged from behind and the valve spool is axially fixed, into a release position, allowing the passage of the associated latching cam (32a, 32b) and thus the switch-over of the valve spool (7), if a switch-over force (11a, 11b) is applied to the valve spool (7) in the relevant axial direction, **characterised in that** the one-piece spring element (45) of the holding spring (44) is exclusively bent two-dimensionally in a spring plane (53) oriented at right angles to the longitudinal axis (12) of the valve spool chamber (5), wherein the spring element (45) as a whole is substantially C-shaped and has a curved section (54), which extends in a curved shape to a certain extent around the longitudinal axis (12) of the valve spool chamber (5) and which is adjoined on both sides via a first kink region (55) by a radially inward-projecting connecting section (56), which is adjoined via a second kink region (57) having a kink direction opposite to that of the first kink region (55), projecting away from the curved section (54), by one of the latching sections (58a, 58b), wherein a chamber section of the spring chamber (35), which accommodates the curved section (54) of the spring element (45), is separated from the valve spool chamber (5) by a curved partition (36) of the valve housing (4), which extends to a certain extent in a circumferential direction (34) around the longitudinal axis (12) of the valve spool chamber (5), wherein each of the two end regions (48) - oriented in the circumferential direction (34) - of the partition (36) is adjoined by a through-opening (52) through which one of the latching sections (58a, 58b) passes.

2. Valve according to claim 1, **characterised in that** the one-piece spring element (45) consists of a metallic spring wire.

3. Valve according to claim 1 or 2, **characterised in that** each latching section (58a, 58b) is adjoined via a third kink region (62) by a radially outward-projecting end section (63) of the spring element (45), which expediently extends into the assigned through-opening (52) from the inside.

4. Valve according to any of claims 1 to 3, **characterised in that** the curved section (54) has an arc length of more than 90° and less than 180°, the arc length being expediently 120° to 140°, and/or **in that** the kink regions (55, 57, 62) of the spring element (45) are rounded.

5. Valve according to any of claims 1 to 4, **characterised in that** the curved section (54) of the spring element (45) is curved continuously along its entire length.

6. Valve according to any of claims 1 to 5, **characterised in that** each latching section (58a, 58b) has an at least partially curved longitudinal dimension, the concave side facing the valve spool (7).

7. Valve according to any of claims 1 to 6, **characterised in that** the two latching cams (32a, 32b) are located diametrically opposite each other on the valve spool (7).

8. Valve according to any of claims 1 to 7, **characterised in that** the valve spool (7) is non-rotatably located in the valve chamber (5), the non-rotatable arrangement expediently being caused by the cooperation between the latching sections (58a, 58b) and the latching cams (32a, 32b).

9. Valve according to any of claims 1 to 8, **characterised in that** the slot-shaped spring chamber (35) has two side walls (37) located opposite each other at a distance in the direction of the longitudinal axis (12) of the valve spool chamber (5) and formed by the valve housing (4), on which side walls (37) the holding spring (44) can be supported and which side walls (37) are joined to each other by the partition (36).

10. Valve according to any of claims 1 to 9, **characterised in that** the curved section (54) of the spring element (45) has a lower bending resistance in the spring plane (53) than the adjoining sections of the spring element (45).

11. Valve according to any of claims 1 to 10, **characterised in that** the valve housing (4) comprises a guide sleeve (65) defining at least a section of the length of the valve spool chamber (5) and at least partially accommodating the valve spool (7), and **in that** it is furthermore provided with an outer housing (66), which encloses the guide sleeve (65) and into which the guide sleeve (65) is installed.

12. Valve according to claim 11, **characterised in that** the slot-shaped spring chamber (35) is exclusively formed in the guide sleeve (65) and has radially on the outside a chamber opening (46) covered by the outer housing (66) accommodating the guide sleeve (65).

13. Valve according to any of claims 1 to 12, **characterised in that** two switching positions of the valve spool (7), in which the two latching sections (58a. 58b) are simultaneously placed in front of the latching cams (32a, 32b) on one or the other axial side, can be fixed by the cooperation between the latching sections (58a. 58b) and the latching cams (32a, 32b).

14. Valve according to any of claims 1 to 13, **characterised in that** the latching cams (32a, 32b) are axially acted upon by the latching sections (58a. 58b) adopting the locking position, whereby the valve spool (7) is pressed against a support surface (15a, 15b) on the housing to fix its switching position.

15. Valve according to any of claims 1 to 14, **characterised in that** it is a pilot-controlled valve equipped with at least one pilot valve unit (3), wherein the switch-over force (11a, 11b) is caused by the application of fluid to the valve spool (7) in at least one direction.

## Revendications

1. Soupape, avec un carter de soupape (4), dans lequel une chambre de tiroir de soupape (5) présentant un axe longitudinal (12) est réalisée, dans laquelle est disposé un tiroir de soupape (7) pouvant être commuté entre plusieurs positions de commutation en imposant une force de commutation (11a, 11b) en exécutant un déplacement de commutation (8) axial, et avec des moyens de maintien (27) servant à fixer avec un enclenchement amovible de manière solidaire au carter le tiroir de soupape (7) dans au moins l'une de ses positions de commutation, lesquels présentent un ressort de maintien (44) constitué d'un élément de ressort (45) d'un seul tenant cintré, lequel ressort de maintien est inséré dans une chambre de ressort (35) en forme d'entaille, s'étendant au moins sur une partie tout autour de la chambre de tiroir de soupape (5), du carter de soupape (4) et qui présente deux sections d'enclenchement (58a, 58b) dépassant dans la chambre de tiroir de soupape (5), flanquant le tiroir de soupape (7) sur des côtés diamétralement opposés, auxquelles sections d'enclenchement une came d'enclenchement (32a, 32b) disposée de manière immobile axialement au niveau du tiroir de soupape (7) est associée et qui peuvent être déviées de manière temporaire depuis une position de fermeture venant en prise par l'arrière avec la came d'enclenchement (32a, 32b) et fixant ainsi de manière axiale le tiroir de soupape (7) dans une position de libération permettant le passage en longueur de la came d'enclenchement (32a, 32b) associée et ainsi la commutation du tiroir de soupape (7) respectivement à l'encontre de la force de ressort ayant un effet de rappel quand le tiroir de soupape (7) est soumis à l'action d'une force de commutation (11a, 11b) dans la direction axiale correspondante, **caractérisée en ce que** l'élément de ressort (45) d'un seul tenant du ressort de maintien (44) est cintré exclusivement de manière bidimensionnelle dans un plan de ressort (53), qui est orienté à angle droit par rapport à l'axe longitudinal (12) de la chambre de tiroir de soupape (5), dans laquelle l'élément de ressort (45) a globalement une forme sensiblement en C et présente une section cintrée (54) s'étendant sous une forme incurvée sur une partie tout autour de l'axe longitudinal (12) de la chambre de tiroir de soupape (5), à laquelle section cintrée une section de raccordement (56) dépassant radialement vers l'intérieur se raccorde au niveau des deux extrémités sur respectivement une première zone de pliage (55), à laquelle section de raccordement se raccorde une des sections d'enclenchement (58a, 58b) par l'intermédiaire d'une deuxième zone de pliage (57) présentant une direction de pliage opposée par rapport à la première zone de pliage (55), laquelle dépasse en s'éloignant de la section cintrée (54), dans laquelle une section de chambre de la chambre de ressort (35) recevant la section cintrée (54) de l'élément de ressort (45) est isolée de la chambre de tiroir de soupape (5) par une paroi intermédiaire (36) du carter de soupape (4) de forme cintrée s'étendant sur une partie dans une direction périphérique (34) tout autour de l'axe longitudinal (12) de la chambre de tiroir de soupape (5), dans laquelle respectivement une ouverture de passage (52) radiale traversée par une des sections d'enclenchement (58a, 58b) se raccorde aux deux zones d'extrémité (48), orientées dans la direction périphérique (34), de la paroi intermédiaire (36).

2. Soupape selon la revendication 1, **caractérisée en ce que** l'élément de ressort (45) d'un seul tenant est constitué d'un fil de ressort métallique.

3. Soupape selon la revendication 1 ou 2, **caractérisée en ce qu'**une section d'extrémité (63) dépassant radialement vers l'extérieur de l'élément de ressort (45) se raccorde à chaque section d'enclenchement (58a, 58b) par l'intermédiaire d'une troisième zone de pliage (62), laquelle section d'extrémité dépasse de manière opportune depuis l'intérieur à l'intérieur de l'ouverture de passage (52) associée.

4. Soupape selon l'une quelconque des revendications 1 à 3, **caractérisée en ce que** la section cintrée (54) présente une longueur d'arc supérieure à 90° et inférieure à 180°, dans laquelle la longueur d'arc est de manière opportune de l'ordre de 120° à 140°, et/ou que les zones de pliage (55, 57, 62) de l'élément de ressort (45) sont arrondies.

5. Soupape selon l'une quelconque des revendications 1 à 4, **caractérisée en ce que** la section cintrée (54) de l'élément de ressort (45) est incurvée en continu au-delà de toute sa longueur.

6. Soupape selon l'une quelconque des revendications 1 à 5, **caractérisée en ce que** chaque section d'enclenchement (58a, 58b) a un profil longitudinal au moins en partie cintré, dans laquelle le côté concave est tourné vers le tiroir de soupape (7).

7. Soupape selon l'une quelconque des revendications 1 à 6, **caractérisée en ce que** les deux cames d'enclenchement (32a, 32b) sont disposées au niveau du tiroir de soupape (7) de manière diamétralement opposée.

8. Soupape selon l'une quelconque des revendications 1 à 7, **caractérisée en ce que** le tiroir de soupape (7) est disposé de manière bloquée en rotation dans la chambre de tiroir de soupape (5), dans laquelle le blocage en rotation est provoqué de manière opportune par la coopération entre les sections d'enclenchement (58a, 58b) et les cames d'enclenchement (32a, 32b).

9. Soupape selon l'une quelconque des revendications 1 à 8, **caractérisée en ce que** la chambre de ressort (35) en forme d'entaille présente deux parois latérales (37) se faisant face de manière espacée dans la direction axiale de l'axe longitudinal (12) de la chambre de tiroir de soupape (5), formées par le carter de soupape (4), au niveau desquelles le ressort de maintien (44) peut prendre appui et qui sont raccordées l'une à l'autre par la paroi intermédiaire (36).

10. Soupape selon l'une quelconque des revendications 1 à 9, **caractérisée en ce que** la section cintrée (54) de l'élément de ressort (45) a dans le plan de ressort (53) une rigidité en flexion inférieure aux sections s'y raccordant de l'élément de ressort (45).

11. Soupape selon l'une quelconque des revendications 1 à 10, **caractérisée en ce que** le carter de soupape (4) présente une douille de guidage (65) définissant au moins une section longitudinale de la chambre de tiroir de soupape (5) et recevant au moins en partie le tiroir de soupape (7) et dispose par ailleurs d'un carter extérieur (66) entourant la douille de guidage (65), dans lequel est insérée la douille de guidage (65).

12. Soupape selon la revendication 11, **caractérisée en ce que** la chambre de ressort (35) en forme d'entaille est réalisée exclusivement dans la douille de guidage (65) et présente radialement à l'extérieur une ouverture de chambre (46), qui est recouverte par le carter extérieur (66) recevant la douille de guidage (65).

13. Soupape selon l'une quelconque des revendications 1 à 12, **caractérisée en ce que** la coopération des sections d'enclenchement (58a, 58b) avec les cames d'enclenchement (32a, 32b) permet de fixer deux positions de commutation du tiroir de soupape (7), dans lesquelles les deux sections d'enclenchement (58a, 58b) sont montées en amont des cames d'enclenchement (32a, 32b) respectivement simultanément sur l'un ou l'autre côté axial.

14. Soupape selon l'une quelconque des revendications 1 à 13, **caractérisée en ce que** les cames d'enclenchement (32a, 32b) sont soumises à une contrainte axiale par les sections d'enclenchement (58a, 58b) adoptant la position de fermeture, ce qui permet de pousser le tiroir de soupape (7) contre une surface d'appui (15a, 15b) solidaire du boîtier aux fins de la fixation de sa position de commutation.

15. Soupape selon l'une quelconque des revendications 1 à 14, **caractérisée en ce qu'**il s'agit d'une soupape à commande pilote, qui est équipée d'au moins une unité de soupape pilote (3), dans laquelle la force de commutation (11a, 11b) est entraînée dans au moins une direction par l'action exercée par un fluide sur le tiroir de soupape (7).
